# EUROPEAN PATENT SPECIFICATION

(11) **EP 0 279 668 B1**
(45) Date of publication and mention of the grant of the patent: **26.03.1997**
(21) Application number: 88301359.1
(22) Date of filing: 18.02.1988
(51) Int. Cl.: B29C 44/00, B29C 47/00

(54) **Foam structure of coalesced foam strands of profiles**
Schaumstruktur aus zusammengeführten Schaumsträngen oder -profilen
Structure de mousse fabriquée à partir des cordons ou profilés en mousse récombinés

(30) Priority: 18.02.1987 US 16147; 12.01.1988 US 142985; 13.01.1988 US 143430; 11.02.1988 US 155338
(43) Date of publication of application: 24.08.1988
(73) Proprietor: THE DOW CHEMICAL COMPANY, Midland Michigan 48640-1967 (US)
(72) Inventor: Malone, Bruce A., Granville, Ohio 43023 (US); Yao, Peter C., Pickerington, Ohio 43147 (US); Russell, Robert J., Westerville, Ohio 43081 (US)
(74) Representative: Burford, Anthony Frederick

(56) References cited:
- FR-A- 1 462 019
- FR-A- 2 252 204
- US-A- 3 251 728
- US-A- 3 406 230
- US-A- 3 573 152
- US-A- 3 607 596
- US-A- 3 624 192
- US-A- 4 102 829
- US-A- 4 110 269
- US-A- 4 221 621

## Description

The present invention relates to foamed products. More particularly, the present invention relates to unique foam products which, in at least some embodiments, have exceptionally good cushioning properties at low static loadings and low densities. More particularly, the present invention relates to such a foam comprising a plurality of coalesced distinguishable expanded strands or profiles.

Foamed objects comprising a plurality of coalesced distinguishable expanded strands of foamed polymers (strand foams) have been previously disclosed in US-A-3,573,152. The foam objects are prepared by extruding a foamable thermoplastic material through a multi-orifice die plate, whereby the individual foamable elements of the strand are formed, expanded and coalesced upon emerging from the die orifices. The exemplified strands are of circular cross-section but there is a reference to the production of strands using multi-orificed dies in which the orifices can be slots, squares, holes or special shapes. The advantages of providing the multi-strand product are specified to be (a) superior strength in the plane transverse to the direction of extrusion; (b) extrusion to a predetermined shape without any need to trim; (c) low density product having distinguishable coalesced cellular strands; and (d) ease of change of shape by varying design of the extrusion die. Although there are small voids formed between adjacent strands in the exemplified structures, there is no recognition of any advantage in maximizing or enlarging the volume of said voids from those resulting from close packing of the strands. Further, although the previously mentioned US-A-3,573,152 discloses that polyethylene resins may be appropriately employed in the preparation of strand foams according to the teachings therein contained, despite diligent efforts by the present Inventors, no polyethylene strand foam has been successfully prepared following the teachings of such references.

Shaped closed cell foams are responsive to the needs of a specific application and can be produced in intricate shapes by a continuous process.

One area in which shaped closed cell foams are widely employed is in the field of packaging in order to provide cushion properties. Fragile objects intended to be transported may be encased and supported in a shaped closed cell foamed cushion adapted to conform to the external shape of the object for which protection is desired. Another area is that of seat cushions. A homogeneous shaped closed cell foam having a soft surface layer of a low density foam and a shock absorbing inner layer of a higher density foam is desirable for such an application.

Presently known polyethylene foam cushion materials possess properties adapted to provide particular cushioning performance. For example, higher density foams are suitably employed to achieve peak deceleration forces between 40 or 50 G's (the gravitational constant) (400 and 500 m/s²) at static loadings of between 0.5 and 1.5 pounds per square inch (3.5 - 10.5 kPa) in standard 24 inch (61 cm) drop tests. At reduced static loadings, between 0.1 and 0.5 pounds per square inch (0.5 - 3.5 kPa), lower density foams on the order of 1.2 to 1.8 pounds per cubic foot (1.9 - 2.9 kg/m³) may be employed. However, suitable cushioning, i.e. peak deceleration forces less than 50 G's (500 m/s²) are not obtainable except upon the use of thicker amounts of cushioning foam. Larger thicknesses of cushioning foam result in excess packaging sizes and concomitant elevated shipping costs.

In order to provide closed cell cushioning foam adapted to provide improved cushioning properties at reduced static loadings, the present Inventors have investigated preparing strand foam or coalesced foam by the techniques disclosed in US-A-3,573,152. In particular, in using polyethylene resins and standard chlorofluorocarbon blowing agents and a suitable die having a multitude of closely spaced small holes therein, the emerging strands could not be made to coalesce or adhere together under any processing conditions employed. In particular, when the foaming temperature of the resin was increased in an attempt to provide a tacky surface to the emerging strands, foam collapse was experienced. Similarly, when the strands were reheated after emerging from the die face, foam collapse was again experienced.

It has now been discovered that the ability of a foamable resin formulation to form a coalesced foam structure upon exiting a die containing a multiplicity of orifices and subsequently foaming is dependent on the existence of sufficient adhesion between neighbouring foam surfaces at the temperature required for such foaming. In particular, certain resins do not possess sufficient surface tacticity in the melt at the temperatures required for foaming to form the desired coalesced structure.

For various reasons high loadings of nucleating solids may also be incorporated into foam, particularly a large cross-section foam board. The nucleating additive may be, for example, a carbon black or a conductive fiber added to produce antistatic or conductive foam; a fire retardant added to improve foam fire resistance; an inert solid or fiber added to reduce processing costs or change the foam physical properties; an additional polymer added to change some foam property; a pigment added to change foam colour or appearance; or any other nucleating solid additive, semi-solid additive or combinations of such nucleating additives.

Often though, the amount of nucleating additives which can be added is severely limited due to the undesirable small cell size in the foam which results when the desired level of nucleating additives are added. This over nucleation results in small cross-sections, folding of foam boards, excessive open cells, poor surface appearances and foam collapse. It is not possible sometimes to produce larger cross-section foams with the desired levels of the nucleating additives. Carbon black at a level of five (5) percent or greater and non-antimony fire retardants at a level of ten (10) percent are examples of these problems.

In order to provide such a highly loaded improved closed cell foam, the present inventors have investigated preparing highly loaded carbon black strand foam by the techniques disclosed in US-A-4,431,575. Although this patent reports a high loading of carbon black for polyolefin resin compositions, a stable polyethylene foam board through a single slot die with carbon black loadings above five (5) percent could not be obtained.

In Figure 1, there are depicted the cushioning properties of several closed cell polyolefin foams including a foam structure of the present invention. Further description of the preparation and testing of such foams is contained in Example 1.

In Figure 2, there is depicted a die face plate comprising narrow slits suitable for preparing a coalesced foam having a honeycomb structure.

In Figure 3, there is depicted a die face plate comprising small circular orifices suitable for preparing a coalesced foam.

In Figure 4, there is depicted a die face plate comprising small circular orifices, with some orifices closed, suitable for preparing a coalesced foam having an L-shaped structure.

In Figure 5, there is depicted a die face plate comprising small circular orifices, with some orifices closed, suitable for preparing a coalesced foam having a t-shaped structure

In Figure 6, there is depicted a die face plate comprising small circular orifices, with some orifices closed, suitable for preparing a coalesced foam having internal voids.

In Figure 7, there is depicted a die face plate comprising small circular orifices, with some orifices closed, suitable for preparing a coalesced foam having a variable density.

Figures 8-10 are graphs showing the heat seal strength of various olefin resins and mixtures of resins and suitable foaming temperatures therefor.

According to a first aspect of the present invention, there is provided a closed cell foam structure comprising a plurality of coalesced extruded strands or profiles of a foamed thermoplastic composition comprising, in polymerized form, at least one non-aromatic olefin having a heat seal strength at a foamable temperature of a film of the thermoplastic composition of at least 3.0 Newton/inch (2.5 cm) width and wherein the foam structure has a gross density from 0.1 to 5.0 lbs/ft³ (0.2 - 8 kg/m³) and the strands or profiles are disposed substantially parallel to the longitudinal axis of the foam with each strand or profile individually being of uniform cross-section along said axis.

In one embodiment of the invention, the thermoplastic composition comprises, in polymerized form a compatible mixture comprising:
(a) an olefin polymer selected from homopolymers of ethylene or propylene, copolymers of ethylene or propylene and one or more C₄₋₈ alpha-olefins, and mixtures thereof; and
(b) an interpolymer of ethylene and at least one comonomer, said interpolymer having a melting point less than the melting point of (a);
and the foam structure has a density from 0.5 to 5.0 lbs/ft³ (0.8 - 8 kg/m³).

The shaped strand foams of the present invention are prepared from a thermoplastic resin and a volatile blowing agent.

The strand foams of the present invention are prepared by the extrusion foaming of a molten thermoplastic composition utilizing a die containing a multiplicity of orifices. The orifices are so arranged such that the contact between adjacent streams of the molten extrudate occurs during the foaming process and the contacting surfaces adhere to one another with sufficient adhesion to result in a unitary structure. Desirably, the individual strands or profiles of coalesced polyolefin foam should remain adhered into a unitary structure to prevent delamination under stresses encountered in preparing, shaping, and using the foam as a cushioning device.

As a technique for identifying suitable thermoplastic compositions for use in the present invention, the aforementioned measurement of heat seal strength of a film thereof is employed. "Heat seal strength" as used herein is defined as the adhesion generated between two film surfaces caused to adhere to one another by application of 40 lbs/in² (275 kPa) pressure for 1.0 sec. at the temperature being tested followed by cooling the film/film laminate for one minute. Such heat sealing may be performed by a Sentinel^{R} Hot Tack machine, Model 12ASL. Bond Strength (Heat Seal Strength) is the force in Newtons/ inch (2.5 cm) width required to cause tearing of at least 50% of the seal area by 180° pull testing. The test constitutes a modification of Dow heat seal test FS-222 and ASTM F-88. Films of the various materials to be tested may be prepared by placing pellets of the appropriate resin between polyethylene terephthalate sheets placed in a 10" x 2" (25 x 5 cm) press heated to 180°C. After one minute preheating, the pellets are compressed under a pressure of 5,000 lbs/in² (35 MPa) for three minutes, cooled, and cut into 1" x 10" (2.5 x 25 cm) strips. Film thickness from .004 to .006 inch (0.10 - 0.15 mm) result.

The heat seal strength of a thermoplastic composition is dependent on the temperature thereof, and generally rises as temperature is increased. However, suitable foams may be prepared only in a narrow temperature range. This temperature range is uniquely defined for each foamable composition and is dependent on several factors, most importantly the melt strength of the foamable thermoplastic composition at the temperature range of interest. This in turn is subject to several factors such as the particular thermoplastic resin used, the amount and type of blowing agent employed, amount and types of fillers, nucleating agents and additional additives, and the presence or absence of crosslinkers. Accordingly, depending on the density of the individual strands of foam utilized in the present invention (referred to as strand density or local density), the extrusion temperature that must be employed is severely limited to generally only about 2°C temperature range. In order to satisfy the requirements of the present invention, the resin should possess at least the aforementioned heat seal strength at such temperature.

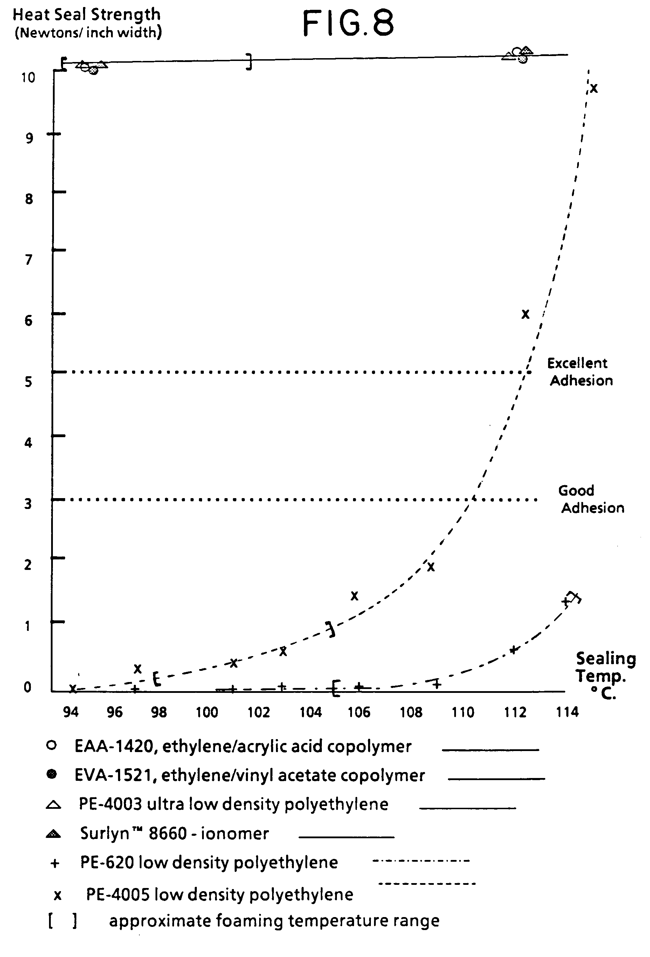

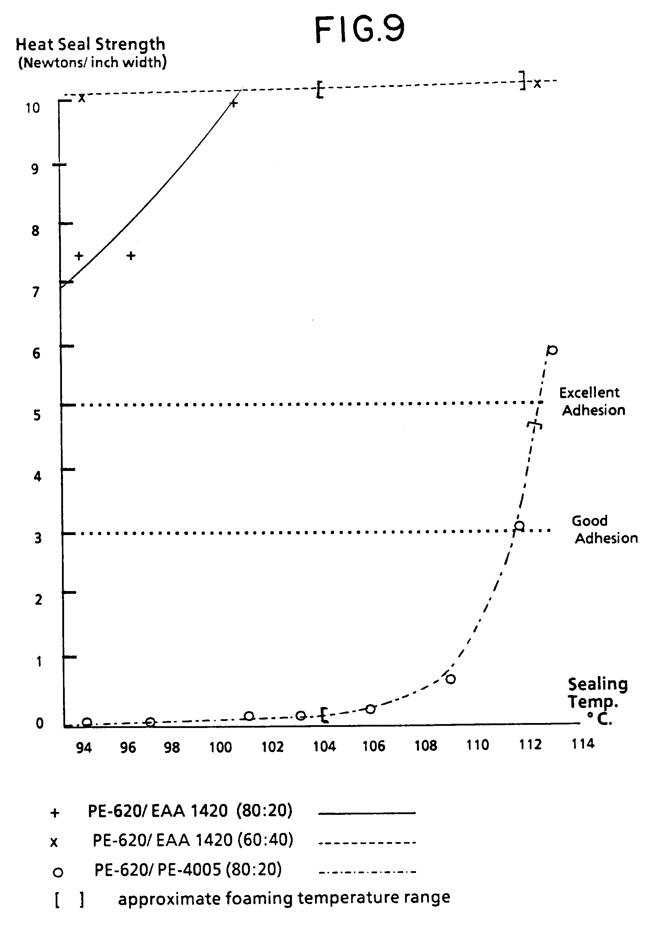

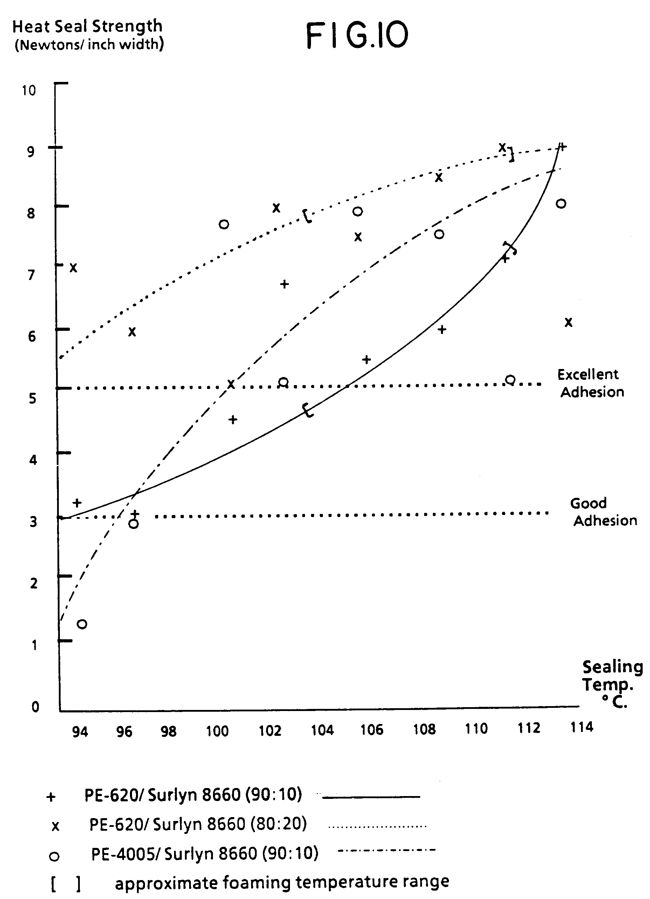

In the appended drawings, Figures 8-10 illustrate the above requirements. For various representative thermoplastic resins or blends actual heat seal strengths are provided. Also illustrated are approximate foaming temperatures for such resins. A resin may suitably be employed according to the present invention only if adequate surface adhesion between adjacent strands is generated under the conditions required for producing a foam. It is seen that such condition may be accurately predicted by reference to a film seal strength measurement of the same thermoplastic composition at the temperatures in question such as are provided in Figures 8-10.

As suitable thermoplastic resins comprising, in polymerized form, a non-aromatic olefin there may be utilized copolymers of ethylene and a copolymerizable polar monomer especially a carboxyl-containing comonomer. Examples include copolymers of ethylene and acrylic acid or methacrylic acid and C₁₋₄ alkyl ester or ionomeric derivatives thereof; ethylene vinylacetate copolymers; ethylene/carbon monoxide copolymers; anhydride containing olefin copolymers of a diene and a polymerizable copolymer; copolymers of ethylene and an alpha-olefin having ultra low molecular weight (i.e. densities less than 0.92); blends of all of the foregoing resins; and blends thereof with polyethylene (high, intermediate or low density). Particularly preferred thermoplastic compositions are random, homogeneous, copolymers of ethylene and acrylic acid, (EAA copolymers) having up to 10% by weight of copolymerized acrylic acid; ionomeric derivatives of the foregoing, copolymers of ethylene and vinyl acetate; ultra low density polyethylene; and blends of the foregoing with one another and with low density polyethylene.

When the polyethylene strand foams are prepared from a homogeneous blend of olefin resins. Component (a) of the resin blend may be any homopolymer of ethylene, e.g., low density polyethylene; high density polyethylene; intermediate density polyethylene; or ultra-high molecular weight polyethylene, a copolymer of ethylene and one or more C₄₋₈ alpha-olefins, e.g., linear low density polyethylene, or a mixture thereof. Preferably, component (a) comprises low density polyethylene having a density from 0.90 to 0.95 g/cm³ and the melt flow rate from 0.1 to 10. Most preferably, the melting point of component (a) is from 100 to 130°C.

Preferred amounts of component (a) in the resin blend are from 60 percent to 90 percent by weight.

Component (b) comprises an interpolymer of ethylene and at least one additional comonomer. Examples of suitable comonomers include the well known carboxyl-containing ethylenically unsaturated comonomers having up to 12 carbons, especially ethylenically unsaturated carboxylic acids, and ethylenically unsaturated carboxylic acid esters, and ethylenically unsaturated dicarboxylic acid anhydrides. Additional suitable comonomers include carbon monoxide, conjugated dienes such as butadiene. Preferred comonomers are carboxyl-containing ethylenically unsaturated comonomers. Highly preferred comonomers include ethylenically unsaturated C₃₋₈ carboxylic acids such as acrylic acid and methacrylic acid and C₁₋₅ alkyl esters thereof; vinyl esters such as vinyl acetate; and ethylenically unsaturated dicarboxylic acid anhydrides such as maleic anhydride.

The polymers of ethylene and at least one carboxyl-containing comonomer may be prepared by addition polymerization according to known techniques, or by a grafting reaction of the reactive carboxyl-containing comonomer with a preformed polymer of ethylene. Additional elastomeric components such as polyisobutylene, polybutadiene, ethylene/propylene copolymers, and ethylene/propylene/diene interpolymers may be included in the blend if desired but are not preferred. Moreover, additional components such as crosslinking agents designed either to provide latent crosslinking of the ethylenic polymer, such as the silane functional crosslinking agents or covalent or ionic crosslinking agents, may be included if desired.

In a preferred resin composition, component (b) comprises a copolymer of ethylene and acrylic acid or ethylene and vinyl acetate containing from 85 percent to 98 percent ethylene. Most preferably, component (b) is a homogeneous random copolymer of ethylene and acrylic acid. Random homogeneous copolymers of ethylene and acrylic acid may be obtained under the tradename EAA available from The Dow Chemical Company. Ethylene vinyl acetate copolymers may be obtained under the tradename Elvax from E.I. duPont deNemours & Company. Anhydride modified copolymers of ethylene are available under the tradename Plexar from Norchem, Inc. Ionomeric copolymers are available under the tradename Surlyn^{R} from E.I. dufont de Namours & Co.

In yet another preferred resin composition, component (b) comprises an ionomer which is an ethylene copolymer with pendant carboxylic acid groups partially or completely neutralized with cations such as NH⁴⁺, Na⁺, Zn^{++,} and Mg⁺⁺. Such ionomers may be obtained under the tradename Surlyn from E.I. duPont de Nemours & Co.

By the term "compatible" is meant that components (a) and (b), when mixed, demonstrate either a single Tg or distinct Tg's such that the differences between them is less than the differences between the separately measured Tg's of the unblended components.

Blending of component (a) and component (b) in order to provide a suitable resin for melt extrusion to prepare the strand foams of the present invention is accomplished according to known techniques in the art. Suitably, a mixer, extruder or other suitable blending device is employed to obtain a homogeneous melt. An extruder or any other suitable device is then employed to incorporate a known blowing agent such as a chlorofluorocarbon, e.g., 1,2-dichlorotetrafluoroethane, 1,2-difluorotetrachloroethane, chlorotrifluoromethane, and mixtures thereof with additional agents such as halogenated hydrocarbons, hydrocarbons, carbon dioxide and water. Additional agents such as nucleating agents, extrusion aids, antioxidants, colorants and pigments, may also be included in the blend.

Provided that the resin meets the heat seal strength requirement of the invention, resin (a) or resin (b) as specified above can be used alone instead of in the specified mixture of (a) and (b).

Additional agents such as nucleating agents, extrusion aids, antioxidants, colorants and pigments may also be included in the olefin resin blend. However, those that function as nucleating additives, which cause foam problems can now be added in an amount of from 0.5 to 50 weight percent, based on resin weight, into the foams of the present invention. Those preferred highly loaded closed cell coalesced foam structures are those having a large cross-section.

Large cross-section foam and board foams are terms which define those foam structures having a cross-section area of at least twelve (12) square inches (80 cm²), preferably at least 18 square inches (120 cm²), and a minimal cross-sectional dimension of at least one quarter inch (6 mm), preferably one half inch (13 mm).

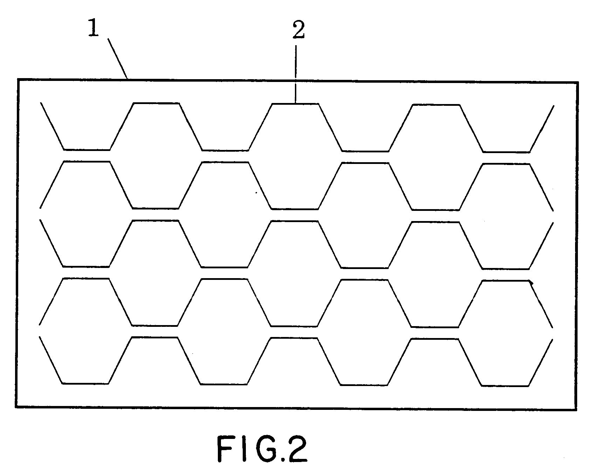

The molten extrudate is then forced through a die plate comprising numerous small holes in a suitably desired spacial arrangement or alternatively an array of slits, desirably in an oscillating form such as a sine wave, honeycomb, square saw tooth or triangular saw tooth wave pattern. Most desirably, the alternating slits are offset so that maxima and minima of adjacent rows are aligned with one another so as to assure contact between rows of extrudate. In the preferred embodiment of the invention, illustrated in Figure 2, the die face plate, 1, contains several rows of narrow slits, 2, comprising equal length segments joined at 60° angles and aligned with respect to neighbouring slits to provide a honeycomb shaped foam structure of separately extruded and coalesced profiles. Such foams prepared wherein the adjoining profiles contain sections adjacent one another having significant surface areas in mutual contact are particularly desired in order to provide structures of improved strength.

Alternatively in the use of holes in the die face plate, various geometric shapes particularly non-circular shapes, such as X-, cross-or star-shaped geometry may be employed. The holes or slits may be generated in the die face plate by the use of electromagnetic discharge or laser cutting technology as is well-known in the art. The spacing and arrangement of the holes or slits in the die face plate may be adjusted in order to vary the ultimate cushioning properties of the strand foam and provide in cross-sectional view, coalesced foam structures of repeating structure containing voids having the shape of polygons or closed curves of any description. The only limitation on spacial arrangement of the die orifices is that contact and coalescence of adjacent strands or profiles after extrusion from the die face plate must be achieved.

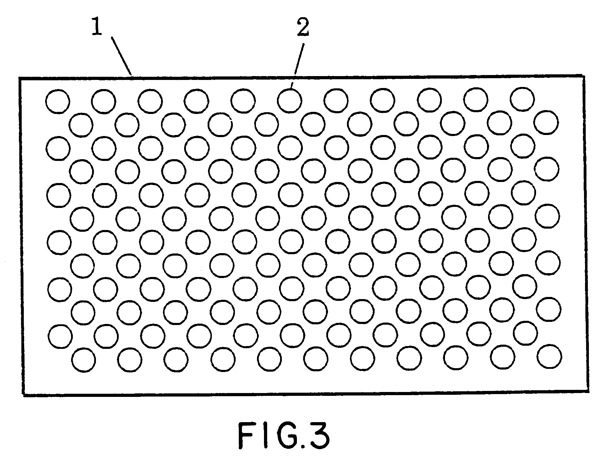

In a preferred embodiment of the invention, illustrated in Figure 3, the die face plate, 1, contains several rows of small circular holes, 2, which rows may be aligned so that the holes in each row are directly over each other or are offset, as seen in Figure 3. The holes may vary in size, but preferably the holes are the same size and preferably that size is 0.1 inch (2.5 mm) diameter or less. Preferably the hole size is less than 0.05 inch (1.3 mm) diameter.

The present invention, with hole sizes less than 0.1 inch (2.5 mm) in diameter, cause a high pressure drop which acts to very uniformly distribute the flow through each hole even if the die face is larger than the diameter of the foamable material stream entering the die. This eliminates the need to make compensations for flow distribution in a specific die design, thus allowing the making of complicated shapes without concern for a flow distribution effect.

By providing a single die with a large number of small holes, as opposed to a specially produced die useful in producing only a single shape, a variety of complicated shapes can be produced from the same die by sealing or blocking all the holes but the holes of the desired shape.

The sealing or blocking of holes can be one by any method, such as for example remote actuation of hole blockers, but the preferred methods are the sealing of the holes with a material which can be removed, such as epoxy, or the placing of a template on the side of the die that first receives the flow of foamable material so that the template effectively seals off the holes that are desired to be blocked.

The sealing material or template is easily removable so that another shape can be quickly produced from the same die with a different template or configuration of sealing material with minimal amount of time necessary to change the die.

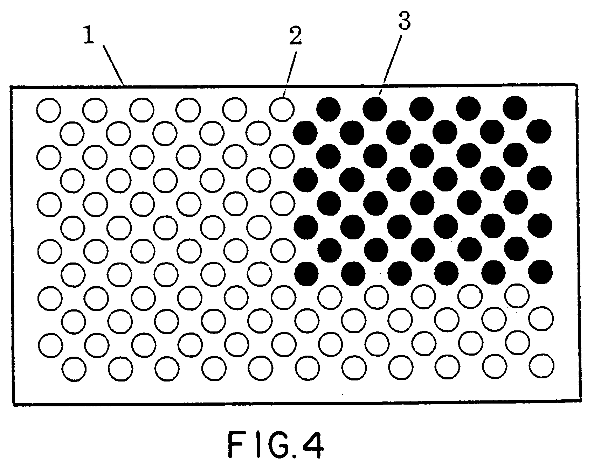

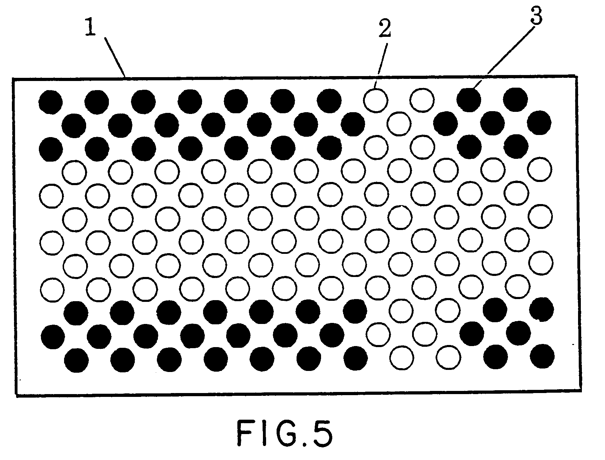

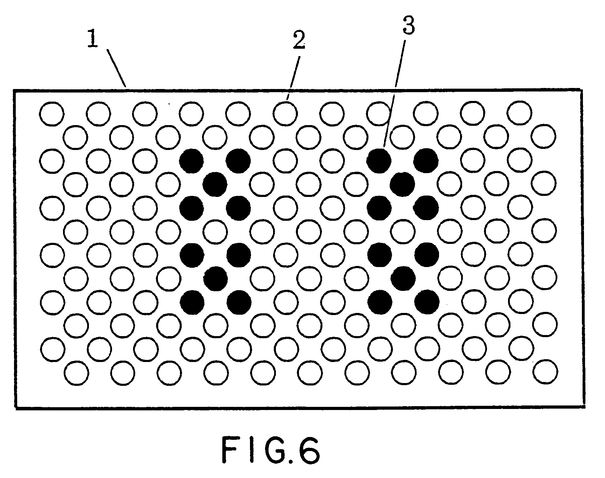

Figures 4, 5 and 6 illustrate the die face plate, 1, having the small circular holes, 2, of Figure 3 with some sealed or blocked holes, 3. These dies can then continuously produce the shapes shown.

It is also possible, according to the present invention, to produce multiple shapes from a single die.

Foams having gross densities (that is bulk densities or densities of the closed-cell foam including interstitial volumes between strands or profiles) varying from 0.2 to 5 pounds per cubic foot (0.3 - 8 kg/m³) may be obtained according to the foregoing technique. Preferred foams are those having a density from 0.5 to 3.0 lb/ft³ (0.8 - 4.8 kg/m³), especially from 1.0 to 2.8 pounds per cubic foot (1.6 - 4.5 kg/m³) and most preferably from 1.2 to 2.0 pounds per cubic foot (1.9 - 3.2 kg/m³). The individual strands of foam preferably have a local or strand density from 0.5 to 6 lbs/ft³ (0.8 - 9.6 kg/m³) and most preferably from 1.0 to 3.0 lbs/ft³ (1.6 - 4.8 kg/m³).

The open channels or voids in the foams of the present invention are arranged in a direction parallel to the extruded strands. The presence of such open channels contributes to the unique cushioning properties of the present invented foam and their shape, size, and frequency of occurrence may be varied through adjustments of the size, location and shape of the die face plate's holes or slits. In one embodiment, the voids occurring in the interior of the foam structure or in one portion thereof may be larger, differently shaped or more or less numerous than those voids that are nearer the surface or in the remaining portion of the foam structure in order to provide tailored cushioning properties in the resulting structure. Preferably the individual strands have a maximum cross-sectional dimension and the profiles have a maximum thickness from 0.5 to 10.0 mm, most preferable 1.0 to 5.0 mm.

The coalesced strands may form a board or other object having a larger cross-sectional area than is possible utilizing existing polyolefin foam extrusion techniques. For example, utilizing equivalent extrusion rates, a foam structure according to the invention may be prepared having a cross-section that is up to 8 times larger than the maximum cross- sectional area of an extruded foam article prepared utilizing a single orifice opening.

Desirably, foams according to the present invention allow the achievement of improved cushioning of objects particularly at low static loadings. For example, preferably according to the present invention, two inch (5 cm) thick samples of the invented closed- cell strand foams when tested at a 24 inch (61 cm) drop height have dynamic cushioning properties such that objects inducing static loads (SL) of from 0.18 to 0.5 lb/in² (1.2 - 3.4 kPa) at the earth's surface experience a peak deceleration of less than 65 G's (640 m/s²), preferably loads of from 0.15 to 0.4 lb/in² (1.0 - 2.8 kPa) experience peak decelerations of less than 55 G's (540 m/s²). In measuring such cushioning properties, the technique employed is ASTM D-1596.

Having described the invention, the following examples are included as illustrative and are not to be construed as limiting. Parts per hundred measurements are based on the resin weight.

### Example 1

A blend of 80 weight percent polyethylene (PE-620, available from The Dow Chemical Company) and 20 weight percent of a homogeneous random copolymer of ethylene and acrylic acid containing approximately 6.5 percent acrylic acid (EAA-459 available from The Dow Chemical Company) and 22 parts per hundred 1,2-dichlorotetrafluoroethane blowing agent is extruded through a 1.5 inch (3.3 cm) extruder connected to a die having 89 equally spaced circular shaped holes arranged in five rows. The holes were approximately 0.040 inches (1.0 mm) in diameter and spaced approximately 0.125 inches (3.2 mm) between centres. Upon extrusion, the individual strands adhered to one another to form a uniformly coalesced closed-cell structure. No evidence of foam instability was observed. The resulting foam had a gross density of about 2.4 pounds per cubic foot (3.8 kg/m³) and had approximately 10 percent by volume open channels running in parallel rows in the extrusion direction. The diameter of the closed-cell strands was approximately 0.125 inch (3.2 mm).

### Example 2

The conditions of Example 1 were substantially repeated excepting that the resin blend comprised approximately 40 percent by weight of a homogeneous random copolymer of ethylene and acrylic acid containing 6.5 percent acrylic acid (EAA-459 available from The Dow Chemical Company) and 30 parts per hundred 1,2-dichlorotetrafluoroethane blowing agent. The remainder of the resin blend comprised low density polyethylene (PE-620 available from The Dow Chemical Company). The resin blend was extruded through a die face plate having approximately 800 holes. Each hole was approximately 0.04 inches (1.0 mm) in diameter. Holes and rows were equally spaced at approximately 0.125 inches (3.2 mm) between centres. The resulting foam had approximately 15 percent open volume in channels running in the extrusion direction and had a foam density of 1.8 pounds per cubic foot (2.9 kg/m³).

### Example 3

A die face plate was provided having 28 individual X-shaped incisions with the height and width of each X being approximately 0.10 inches (2.5 mm) and the width of the incision being approximately 0.015 inches (0.4 mm). The X-shaped incisions were arranged in 5 rows, spaced approximately .0625 inches (1.6 mm) apart. A resin blend substantially the same of that in Example 1 was then extruded through the die face plate at a rate such that, upon expansion, the resulting X-shaped foam strands contacted one another on the tips only of the X-shaped cross-sectional dimensions. The resulting foam contained approximately 35 percent by volume open channels in the extrusion direction of the plank. The foam gross density was 2.6 pounds per cubic foot (4.1 kg/m³).

### Example 4

A die face plate was provided having 2600 holes 0.040 inches (1.0 mm) in diameter and 0.1 inch (2.5 mm) long is arranged in a rectangular pattern 1.70 inches (43.2 mm) by 21.0 (533.4 mm) inches with a 0.12 inch (3.0 mm)spacing between holes. A blend of 80 weight percent polyethylene (PE-620, available from The Dow Chemical Company) and 20 weight percent of a copolymer of ethylene and acrylic acid containing approximately 9.0 percent acrylic acid (EAA-459 available from The Dow Chemical Company), 28 parts per hundred 1,2-dichlorotetrafluoroethane blowing agent and 0.5 parts per hundred talc is extruded, mixed, cooled to 110 C and forced through the die face plate. Various shapes, including a plank measuring 26 inches (660 mm) wide by 2.37 inches (60 mm) thick, are produced. The plank has excellent strand adhesion and the thickness of the plank varies no more than two (2) percent of the total thickness. The standard deviation of sixty measurements across the width vary only +/- 0.8 percent. This precise thickness measurement is important because it is accomplished without the aid of a post-extrusion forming method. Most complicated shaped strand foams would also be produced without the aid of a post-extrusion forming method.

### Example 5

A blend of 80 weight percent polyethylene (PE-620, available from The Dow Chemical Company) and 20 weight percent of Suryln-8660 (obtained from E.I. duPont de Nemours & Co.), 26 parts per hundred of a mixture of 1,2-dichlorotetrafluoroethane and dichlorodifluoromethane blowing agent and 0.8 parts per hundred talc is extruded, mixed, cooled and forced through the die face plate of Example 4. Nine hundred (900) holes in the die are blocked off to provide a homogeneous variable density closed cell strand foam plank having the following characteristics: at about 16 percent through the thickness direction from the top of the structure the density is about 2.02 lb/ft³ (3.23 kg/m³); at about 33 percent from the top of the structure the density is about 2.18 lb/ft³ (3.49 kg/m³); at about 50 percent from the top of the structure the density is about 2.54 lb/ft³ (4.06 kg/m³); at about 67 percent from the top of the structure the density is about 2.79 lb/ft³ (4.46 kg/m³); and at about 77 percent from the top of the structure the density is about 2.45 lb/ft³ (3.92 kg/m³). This shows that variable density closed cell strand foam structures are easily and quickly produced.

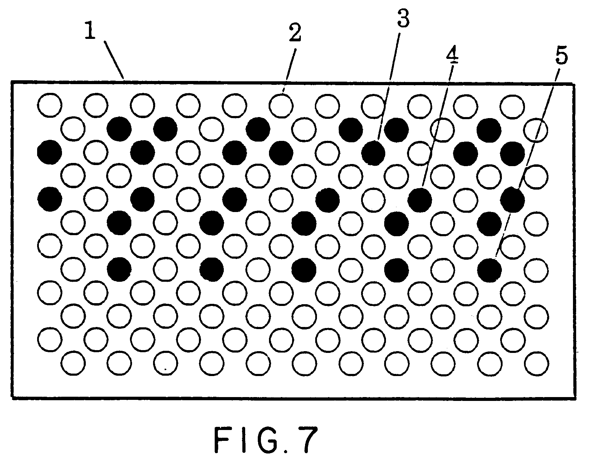

Figure 7 illustrates a die configuration for a homogeneous variable density closed cell strand foam structure with the die face plate, 1, having openings, 2, and a first level of blocked openings in multiples of three, 3, a second level of blocked openings in multiples of two, 4, a third level of single blocked openings, 5, and a last level having no blocked openings.

### Example 6

A blend of 80 weight percent polyethylene (PE-4005, available from The Dow Chemical Company) and 20 weight percent of Suryln-8660 (obtained from E.I. duPont de Nemours & Co.), and 23 parts per hundred 1,2-dichlorotetrafluoroethane blowing agent is extruded through a 1.5 inch (38.1 mm) extruder connected to a die having 89 equally spaced circular shaped holes arranged in five rows. The holes were approximately 0.040 inches (1.0 mm) in diameter and spaced approximately 0.125 inches (3.2 mm) between centres. Levels of 5, 7.5, 8.5 and 10 weight percent carbon black (Ketjenblack 600, a product of AKZO Chemie N.V.) are added. The resulting foams are stable with a surface appearance and size equivalent to strand foams containing no carbon black. The foam densities range from 3.0 to 3.5 lb/ft³ (4.8 to 5.6 kg/m³) and have a volume resistivity in the range of about 10⁵ to about 10⁹ ohms/centimeter.

### Testing

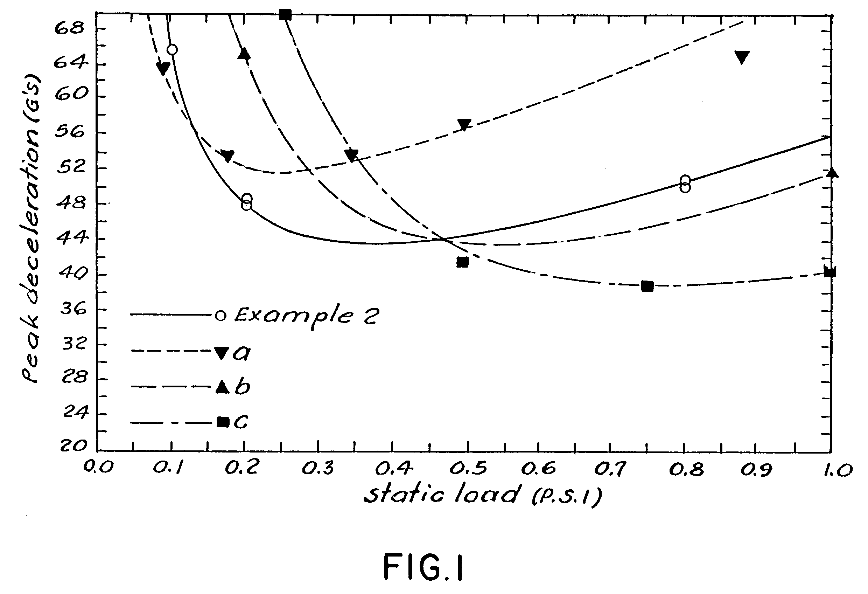

Various conventional polyolefin resin foams and the strand foam of Example 2 were tested for cushioning properties. Two inch (5 cm) thick samples of closed cell foams were tested for peak deceleration at 24 inch (61 cm) drop heights. Besides a foam according to the invention prepared according to Example 2, three additional conventional closed-cell foams (a, b, c) were tested. a) was a foam of 1.4 lbs/ft³ (2.2 kg/m³) density comprising a blend of ethylene acrylic acid and ethylene vinyl acetate (25 weight percent EAA-1430 available from The Dow Chemical Company, and 75 percent Elvax 470, available from E.I. duPont deNemours & Company). b) and c) were conventional closed-cell polyethylene foams of 1.8 and 2.4 pounds per cubic foot (2.9 and 3.8 kg/m³) density, respectively. Cushioning properties were measured according to ASTM D-1596. The results are contained in Figure 1. In the figure, Example 2, is the result obtained for the foam of Example 2, and (a), (b) and (c) identify the results obtained for foams (a), (b) and (c), respectively. A computer generated empirical fit is supplied for each of the foams. The fit is a formula, wherein peak deceleration, measured in G's, is defined as a function of static load (SL) for the various curves.

By reference to Figure 1 and the results of the testing, it may be seen that a unique cushioning ability at reduced static loadings is obtained by the foams according to the present invention. In particular, at static loads from 0.1 to 0.5 pounds per square inch (0.7 to 3.5 kPa), the strand foams of the present invention produce peak decelerations from 65 to 45 G's (640 to 440 m/s²) or less. More particularly, at static loadings from 0.15 to 0.4 lbs/in² (1.0 to 2.8 kPa), the compositions of the invention provide peak decelerations less than 55 G's (540 m/s²), which are unattainable by the use of equivalent thicknesses of conventional foam cushioning materials.

The computer generated fit for the various curves are as follows:
- Example 2: G's = 20.7+31.1(SL)+4.3/SL
- a: G's = 32.5+38.2(SL)+2.5/SL
- b: G's = 3.2+37.2(SL)+10.9/SL
- c: G's = 7.2+30.1(SL)+17.7/SL

Accordingly, foams according to the invention are capable of providing peak decelerations measured in G's in the range of static loadings from 0.15 to 0.4 lb/in² (1.0 to 2.8 kPa) less than or equal to the value determined by the formula G's = 2.07+31.1(SL)+4.3/SL.

While cushioning properties are necessary for some foam uses, other uses may require only high loading of a nucleating additive, while still others may require both.

## Claims

1. A closed cell foam structure comprising a plurality of coalesced extruded strands or profiles of a foamed thermoplastic composition, said strands or profiles being disposed substantially parallel to the longitudinal axis of the foam with each strand or profile individually being of uniform cross-section along said axis, wherein the foam structure has a gross density from 0.2 - 8 kg/m³ (0.1 to 5.0 lbs/ft³); the thermoplastic composition comprises, in polymerized form, at least one non-aromatic olefin; and a film of the thermoplastic composition has a heat seal strength of at least 3.0 Newton/2.5 cm (1 inch) width measured by modified ASTM F-88 described herein (after cooling subsequent to adhesion at the temperature at which the thermoplastic composition is foamed).

2. A foam as claimed in Claim 1, wherein a 5 cm (2 in) thick sample has dynamic cushioning properties such that objects inducing static loads of from 1.0 to 2.8 kPa (0.15 to 0.4 lbs/in²) dropped from a height of 61 cm (24 inches) at the earth's surface experience a peak deceleration of less than 540 m/s² (55 G's).

3. A foam as claimed in Claim 1, wherein the thermoplastic resin is an olefin resin blend of
(a) an olefin polymer selected from homopolymers of ethylene or propylene, copolymers of ethylene or propylene with one or more C₄₋₈ alpha-olefins and mixtures thereof; and
(b) an interpolymer of ethylene and at least one comonomer, said interpolymer having a melting point less than the melting point of olefin polymer (a).

4. A foam as claimed in any one of the preceding claims, wherein the strands are each 0.5 to 10.0 mm in the largest cross-sectional dimension, or the profiles are each 0.5 to 10.0 mm in cross-sectional thickness.

5. A foam as claimed in any one of the preceding claims, wherein the strands have a non-circular cross-sectional shape.

6. A foam as claimed in Claim 5, wherein the strand's cross-sectional shape is that of a star, cross or X.

7. A foam as claimed in any one of the preceding claims, wherein the strands or profiles when coalesced describe in cross-section a repeating structure containing voids having the shape of polygons or closed curves.

8. A foam as claimed in Claim 1, wherein the thermoplastic composition is a copolymer of ethylene and a carboxyl-containing comonomer.

9. A foam as claimed in Claim 1, wherein the thermoplastic composition is selected from random, homogeneous, copolymers of ethylene and acrylic acid having up to 10 percent acrylic acid and ionomeric derivatives thereof; ethylene-vinyl acetate copolymers; ultra low density polyethylene; blends thereof and blends thereof with low density polyethylene.

10. A foam as claimed in Claim 1 or Claim 3, wherein the thermoplastic composition comprises a polyethylene homopolymer.

11. A foam as claimed in Claim 10, wherein said homopolymer has a density of 0.90 to 0.95 g/cm³ and a melt flow rate of 0.1 to 10.

12. A foam as claimed in Claim 1 or Claim 3, wherein the thermoplastic composition comprises an interpolymer of ethylene with an ethylenically unsaturated C₃₋₈ carboxylic acid or with a C₁₋₅ alkyl ester.

13. A foam as claimed in Claim 12, wherein said interpolymer is a copolymer of ethylene with acrylic acid or with vinyl acetate, said copolymer containing 85 to 98 percent ethylene.

14. A foam as claimed in Claim 13, wherein said interpolymer is a homogeneous random copolymer of ethylene and acrylic acid.

15. A foam as claimed in Claim 1 or Claim 3, wherein the thermoplastic composition comprises an ionomer which is an interpolymer of ethylene with at least one comonomer and having pendant carboxylic acid groups partially or completely neutralized with cations.

16. A foam as claimed in Claim 1, wherein the foam contains a nucleating additive in an amount of 0.5 to 50 weight percent based on the weight of the thermoplastic composition.

17. A foam as claimed in Claim 1, wherein the thermoplastic composition comprises a blend of polyethylene homopolymers.

18. A foam as claimed in Claim 17, wherein the thermoplastic composition comprises a blend of low density polyethylene homopolymers.

19. A method of preparing a foam structure as claimed in Claim 1, comprising extruding the foamable molten thermoplastic composition through a die plate having a plurality of orifices or an array of slits arranged so that adjacent strands or profiles extruded therethrough contact and coalesce to form a foam structure in which said strands or profiles are disposed substantially parallel to the longitudinal axis of the foam with each strand or profile individually being of uniform cross-section along said axis.

20. A method as claimed in Claim 19, wherein the thermoplastic resin is an olefin resin blend of
(a) an olefin polymer selected from homopolymers of ethylene or propylene, copolymers of ethylene or propylene with one or more C₄₋₈ alpha-olefins and mixtures thereof; and
(b) an interpolymer of ethylene and at least one comonomer, said interpolymer having a melting point less than the melting point of olefin polymer (a).

21. A method as claimed in Claim 19, wherein some of the orifices or slits are temporarily blocked so that the remaining openings form the closed-cell foam structure in a desired shape.

22. A method as claimed in Claim 19, wherein the orifices or slits are of a size and arrangement such that adjacent extruded strands or profiles are mutually orientated and/or shaped and are joined at their extremities to form, in cross-section of the structure, a network having voids of polygonal or closed-curve shape.

23. A method as claimed in Claim 19, wherein the thermoplastic composition is as defined in any one of Claims 8 to 18 or the strands or profiles are as defined in any one of Claims 4 to 6.

## Patentansprüche

1. Geschlossenzellige Schaumstruktur enthaltend eine Vielzahl von zusammengeführten extrudierten Strängen oder Profilen einer geschäumten thermoplastischen Zusammensetzung, wobei die Stränge oder Profile im wesentlichen parallel zu der Längsachse des Schaums angeordnet sind und wobei jeder Strang oder jedes Profil einzeln entlang der Achsen einen gleichförmigem Querschnitt hat, wobei die Schaumstruktur eine Gesamtdichte von 0,2 - 8 kg/m³ (0,1 bis 5,0 lbs/ft³) hat; die thermoplastische Zusammensetzung in polymerisierter Form mindestens ein nicht-aromatisches Olefin enthält; und ein Film der thermoplastischen Zusammensetzung eine Heißsiegelsfestigkeit von mindestens 3,0 Newton/2,5 cm (1 inch) Breite hat, gemessen durch das hierin beschriebene modifizierte ASTM F-88 (nach dem auf das Verbinden bei der Temperatur, bei der die thermoplastische Zusammensetzung geschäumt wird, folgende Abkühlen).

2. Schaum nach Anspruch 1, wobei eine 5 cm (2 in) dicke Probe solche dynamischen Dämpfungseigenschaften hat, daß Objekte, die eine statische Last von 1, 5 bis 2,8 kPa (0,15 bis 0,4 lbs/in²) induzieren, die von einer Höhe von 61 cm (24 inches) auf die Erdoberfläche fallengelassen werden, einen Verzögerungsspitzenwert von weniger als 540 m/s² (55 G) ausgesetzt sind.

3. Schaum nach Anspruch 1, wobei das thermoplastische Harz eine Olefin-Harzmischung von
(a) einem Olefin-Polymer, ausgewählt aus Homopolymeren von Ethylen oder Propylen, Copolymeren von Etylen oder Propylen mit einem oder mehreren C₄₋₈-Alpha-Olefinen und Mischungen von diesen ist; und
(b) einem Mischpolymerisat von Ethylen und mindestens einem Comonomer, wobei das Mischpolymerisat einen Schmelzpunkt hat, der niedriger als der Schmelzpunkt des Olefin-Polymers (a) ist.

4. Schaum nach einem der vorangegangenen Ansprüche, wobei die Stränge jeweils ein größtes Querschnittsmaß von 0,5 bis 10,5 mm Ausdehnung haben, oder die Profile jeweils eine Querschnittsdicke von 0,5 bis 10 mm haben.

5. Schaum nach einem der vorangegangenen Ansprüche, wobei die Stränge eine nicht kreisförmige Querschnittsform haben.

6. Schaum nach Anspruch 5, wobei die Querschnittsform der Stränge die eines Sterns, eines Kreuzes oder eines X ist.

7. Schaum nach einem der vorangegangenen Ansprüche, wobei die Stränge oder Profile, wenn sie zusammengeführt sind, im Querschnitt eine sich wiederholende Struktur enthaltend Hohlräume mit dem Aussehen von Polygonen oder geschlossenen Kurven beschreiben.

8. Schaum nach Anspruch 1, wobei die thermoplastische Zusammensetzung ein Copolymer von Ethylen und einem Carboxyl enthaltenden Comonomer ist.

9. Schaum nach Anspruch 1, wobei die thermoplastische Zusammensetzung ausgewählt ist aus beliebigen, homogenen Copolymeren von Ethylen und Acrylsäure mit bis zu 10 % Acrylsäure und Ionomer-Derivaten von dieser; Ethylen-Vinylacetat Copolymeren; Polyethylene mit äußerst niedriger Dichte; Mischungen von diesen und Mischungen von diesen mit Polyethylenen niedriger Dichte.

10. Schaum nach Anspruch 1 oder Anspruch 3, wobei die thermoplastische Zusammensetzung ein Polyethylen-Homopolymer enthält.

11. Schaum nach Anspruch 10, wobei das Homopolymer eine Dichte von 0,90 bis 0,95 g/cm³ und eine Schmelzflußrate von 0,1 bis 10 hat.

12. Schaum nach Anspruch 1 oder Anspruch 3, wobei die thermoplastische Zusammensetzung ein Mischpolymerisat von Ethylen mit einer ethylenisch ungesättigten C₃₋₈-Carbonsäure oder mit einem C₁₋₅-Alkylester enthält.

13. Schaum nach Anspruch 12, wobei das Mischpolymerisat ein Copolymer von Ethylen mit Acrylsäure oder mit Vinylacetat ist, wobei das Copolymer 85 bis 98 % Ethylen enthält.

14. Schaum nach Anspruch 13, wobei das Mischpolymerisat ein beliebiges homogenes Copolymer von Ethylen und Acrylsäure ist.

15. Schaum nach Anspruch 1 oder Anspruch 3, wobei die thermoplastische Zusammensetzung ein Ionomer enthält, das ein Mischpolymerisat von Ethylen mit mindestens einem Comonomer ist und das angehängte Carbonsäuregruppen hat, die teils oder vollständig mit Kationen neutralisiert sind.

16. Schaum nach Anspruch 1, wobei der Schaum ein keimbildendes Additiv in einer Menge von 0,5 bis 50 Gew.-% basierend auf dem Gewicht der thermoplastischen Zusammensetzung enthält.

17. Schaum nach Anspruch 1, wobei die thermoplastische Zusammensetzung ein Gemisch aus Polyethylen-Homopolymeren enthält.

18. Schaum nach Anspruch 17, wobei die thermoplastische Zusammensetzung ein Gemisch aus Polyethylen-Homopolymeren niedriger Dichte enthält.

19. Verfahren zur Herstellung einer Schaumstruktur gemäß Anspruch 1, enthaltend Extrudieren der schäumbaren geschmolzenen thermoplastischen Zusammensetzung durch eine Formplatte mit einer Vielzahl von Öffnungen oder einer Anordnung von Schlitzen, die so angeordnet sind, daß benachbarte Stränge oder Profile, die durch diese extrudiert werden, in Kontakt und zusammengeführt sind, um eine Schaumstruktur zu bilden, in der die Stränge oder Profile im wesentlichen parallel zu den Längsachsen des Schaums angeordnet sind, wobei jeder einzelne Strang oder jedes einzelne Profil entlang der Achsen von gleichförmigem Querschnitt ist.

20. Verfahren nach Anspruch 19, wobei das thermoplastische Harz eine Olefin-Harzmischung aus
(a) einem Olefin-Polymer ausgewählt aus Homopolymeren von Ethylen oder Propylen, Copolymeren von Ethylen oder Propylen mit einem oder mehreren C₄₋₈-Alpha-Olefinen und Mischungen von diesen ist; und
(b) einem Mischpolymerisat von Ethylen und mindestens einem Comonomer, wobei das Mischpolymerisat einen Schmelzpunkt hat, der niedriger ist als der Schmelzpunkt des Olefin-Polymers (a).

21. Verfahren nach Anspruch 19, wobei einige der Öffnungen oder Schlitze zeitweilig so blockiert sind, daß die verbleibenden Öffnungen eine Schaumstruktur mit geschlossenen Zellen in einer gewünschten Form bilden.

22. Verfahren nach Anspruch 19, wobei die Öffnungen oder Schlitze von einer solchen Größe und Anordnung sind, daß benachbarte extrudierte Stränge oder Profile wechselseitig orientiert und/oder geformt sind und an ihren äußersten Enden in Verbindung sind, um, im Querschnitt ihrer Struktur, ein Netzwerk mit Hohlräumen von polygonaler Form oder in Form von geschlossenen Kurven zu bilden.

23. Verfahren nach Anspruch 19, wobei die thermoplastische Zusammensetzung wie in einem der Ansprüche 8 bis 18 definiert ist oder die Stränge oder Profile wie in einem der Ansprüche 4 bis 6 definiert sind.

## Revendications

1. Structure de mousse à alvéoles fermées comprenant plusieurs brins ou profilés extrudés, se combinant, d'une composition thermoplastique en forme de mousse, lesdits brins ou profilés étant disposés sensiblement parallèlement à l'axe longitudinal de la mousse, chaque brin ou profilé présentant individuellement une section transversale uniforme le long dudit axe, dans laquelle la structure de mousse présente une densité globale de 0,2 à 8 kg/m³ (0,1 à 5,0 livres/pied³) ; la composition thermoplastique comprend, sous une forme polymérisée, au moins une oléfine non-aromatique ; et un film de la composition thermoplastique a une résistance au scellage à chaud d'au moins 3 N/2,5 cm (1 pouce) de largeur, mesurée selon la norme ASTM F-88 modifiée décrite dans le présent document (après refroidissement suivant l'adhésion à la température à laquelle on a fait mousser la composition thermoplastique).

2. Mousse conforme à la revendication 1, dans laquelle un échantillon d'épaisseur 5 cm (2 pouces) a des propriétés dynamiques d'amortissement telles que les objets impliquant des charges statiques de 1,0 à 2,8 kPa (0,15 à 0,4 livre/pouce²) qui ont chuté d'une hauteur de 61 cm (24 pouces) à la surface de la terre subissent une pointe de décélération de moins de 540 m/s² (55g).

3. Mousse conforme à la revendication 1, dans laquelle la résine thermoplastique est un mélange de résine oléfinique de :
(a) une polyoléfine choisie parmi des homopolymères d'éthylène ou de propylène, des copolymères d'éthylène ou de propylène et d'une ou plusieurs α-oléfines en C₄₋₈, et des mélanges de ces derniers ; et
(b) un interpolymère d'éthylène et d'au moins un comonomère, ledit interpolymère présentant un point de fusion inférieur au point de fusion de la polyoléfine (a).

4. Mousse conforme à l'une quelconque des précédentes revendications, dans laquelle la dimension de la section transversale la plus grande des brins vaut pour chacun d'entre eux de 0,5 à 10,0 mm, ou l'épaisseur de la section transversale des profilés vaut pour chacun d'entre eux de 0,5 à 10,0 mm.

5. Mousse conforme à l'une quelconque des précédentes revendications, dans laquelle les brins ont une forme de section transversale qui n'est pas circulaire.

6. Mousse conforme à la revendication 5, dans laquelle la forme de la section transversale des brins est celle d'une étoile, d'une croix ou d'un X.

7. Mousse conforme à l'une quelconque des précédentes revendications, dans laquelle les brins ou profilés, quand ils se sont combinés, montrent en coupe transversale une structure répétitive contenant des vides qui ont la forme de polygones ou de courbes fermées.

8. Mousse conforme à la revendication 1, dans laquelle la composition thermoplastique est un copolymère d'éthylène et d'un comonomère contenant des groupes carboxyle.

9. Mousse conforme à la revendication 1, dans laquelle la composition thermoplastique est choisie parmi des copolymères homogènes, statistiques d'éthylène et d'acide acrylique comportant jusqu'à 10 % d'acide acrylique et de dérivés ionomères de ces derniers ; des copolymères éthylène/acétate de vinyle ; un polyéthylène ultra-basse densité ; des mélanges de ces derniers et des mélanges de ces derniers avec un polyéthylène basse densité.

10. Mousse conforme à la revendication 1 ou 3, dans laquelle la composition thermoplastique comprend un polyéthylène homopolymère.

11. Mousse conforme à la revendication 10, dans laquelle ledit homopolymère présente une masse volumique de 0,90 à 0,95 g/cm³ et un indice de fluidité à l'état fondu de 0,1 à 10.

12. Mousse conforme à la revendication 1 ou 3, dans laquelle la composition thermoplastique comprend un interpolymère d'éthylène et d'un acide carboxylique en C₃₋₈ à insaturations éthyléniques ou d'un ester d'alkyle en C₁₋₅.

13. Mousse conforme à la revendication 12, dans laquelle ledit interpolymère est un copolymère d'éthylène et d'acide acrylique ou d'acétate de vinyle, ledit copolymère contenant de 85 à 98 % d'éthylène.

14. Mousse conforme à la revendication 13, dans laquelle ledit interpolymère est un copolymère statistique homogène d'éthylène et d'acide acrylique.

15. Mousse conforme à la revendication 1 ou 3, dans laquelle la composition thermoplastique comprend un ionomère qui est un interpolymère d'éthylène et d'au moins un comonomère et qui présente des groupes pendants de type acide carboxylique neutralisés en partie ou complètement par des cations.

16. Mousse conforme à la revendication 1, dans laquelle la mousse contient un additif de nucléation en une quantité de 0,5 à 50 % en poids par rapport au poids de la composition thermoplastique.

17. Mousse conforme à la revendication 1, dans laquelle la composition thermoplastique comprend un mélange de polyéthylènes homopolymères.

18. Mousse conforme à la revendication 17, dans laquelle la composition thermoplastique comprend un mélange de polyéthylènes homopolymères basses densités.

19. Procédé de préparation d'une structure de mousse conforme à la revendication 1, qui comprend l'extrusion de la composition thermoplastique fondue pouvant mousser à travers une plaque de filière présentant plusieurs orifices ou une série de fentes disposées de telle manière que des brins ou profilés adjacents extrudés à travers ces dernières sont mis en contact et combinés pour former une structure de mousse dans laquelle lesdits brins ou profilés sont disposés sensiblement parallèlement à l'axe longitudinal de la mousse, chaque brin ou profilé présentant individuellement une section transversale uniforme le long dudit axe.

20. Procédé conforme à la revendication 19, dans lequel la résine thermoplastique est un mélange de résine oléfinique de :
(a) une polyoléfine choisie parmi les homopolymères d'éthylène ou de propylène, des copolymères d'éthylène ou de propylène et d'une ou plusieurs α-oléfines en C₄₋₈, et des mélanges de ces derniers ; et
(b) un interpolymère d'éthylène et d'au moins un comonomère, ledit interpolymère ayant un point de fusion inférieur au point de fusion de la polyoléfine (a).

21. Procédé conforme à la revendication 19, dans lequel quelques-uns des orifices ou fentes sont temporairement bloqués de manière à ce que les ouvertures restantes forment la structure de mousse à alvéoles fermées sous une forme voulue.

22. Procédé conforme à la revendication 19, dans lequel les orifices ou fentes présentent une taille et une disposition telles que des brins ou profilés extrudés adjacents sont mutuellement orientés et/ou mis en forme et sont reliés par leurs extrémités pour former, en coupe transversale de la structure, un réseau présentant des vides de forme polygonale ou de courbe fermée.

23. Procédé conforme à la revendication 19, dans lequel la composition thermoplastique est conforme à l'une quelconque des revendications 8 à 18, ou les brins ou profilés sont conformes à l'une quelconque des revendications 4 à 6.
